(19) Europäisches Patentamt / European Patent Office / Office européen des brevets

(11) **EP 2 426 639 B1**

(12) **FASCICULE DE BREVET EUROPEEN**

(45) Date de publication et mention de la délivrance du brevet:
**30.09.2015 Bulletin 2015/40**

(51) Int Cl.:
**G06T 3/40** *(2006.01)*

(21) Numéro de dépôt: **11179394.9**

(22) Date de dépôt: **30.08.2011**

(54) **Procédé de démosaïçage d'une image brute numérique, programme d'ordinateur et circuit imageur ou graphique correspondants**

Demosaicing-Verfahren für ein digitales Rohbild, entsprechendes Computerprogramm und entsprechende Bild- oder Grafikerzeugungsschaltung

Method for demosaicing a raw digital image, corresponding computer program and imaging or graphic circuit

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2010 FR 1057074**

(43) Date de publication de la demande:
**07.03.2012 Bulletin 2012/10**

(73) Titulaire: **Commissariat à l'Énergie Atomique et aux Énergies Alternatives 75015 Paris (FR)**

(72) Inventeur: **Alacoque, Laurent 38340 Voreppe (FR)**

(74) Mandataire: **Bonnet, Michel Cabinet Bonnet 93, rue Réaumur 75002 Paris (FR)**

(56) Documents cités:
• LI CHEN ET AL: "Color Filter Array Demosaicking Using Wavelet-Based Subband Synthesis", IMAGE PROCESSING, ICIP 2005, vol. 2, 11 septembre 2005 (2005-09-11), pages 1002-1005, XP010851225,
• DRIESEN J ET AL: "Wavelet-based color filter array demosaicking", IMAGE PROCESSING, ICIP 2004. INTERNATIONAL CONFERENCE ON. SINGAPORE 24-27 OCT. 2004, PISCATAWAY, NJ, USA, IEEE, vol. 5, 24 octobre 2004 (2004-10-24), pages 3311-3314, XP010786505,
• BEERMANN M ET AL: "Improved demosaicking in the frequency domain by restoration filtering of the LCC band", VISUAL COMMUNICATIONS AND IMAGE PROCESSING; 29-1-2008 - 31-1-2008; SAN JOSE,, 29 janvier 2008 (2008-01-29), XP030081238,
• KOMATSU T ET AL: "Sharpening-demosaicing with the shift-invariant Haar wavelet transform", INTELLIGENT SIGNAL PROCESSING AND COMMUNICATION SYSTEMS, ISPACS 2009. INTERNATIONAL SYMPOSIUM ON, IEEE, PISCATAWAY, NJ, USA, 7 janvier 2009 (2009-01-07), pages 252-255, XP031612846,
• CHAN R H ET AL: "Wavelet algorithms for high-resolution image reconstruction", SIAM JOURNAL ON SCIENTIFIC COMPUTING, SOCIETY FOR INDUSTRIAL AND APPLIED MATHEMATICS, US, vol. 24, no. 4, 1 janvier 2002 (2002-01-01), pages 1408-1432, XP009146219,
• TAKAHIRO SAITO ET AL: "Sharpening-demosaicing method with a total-variation-based super-resolution technique", PROCEEDINGS OF THE SPIE, SPIE, BELLINGHAM, VA, US, vol. 5678, 1 janvier 2005 (2005-01-01), pages 177-188, XP007917969,

## Description

La présente invention concerne un procédé de démosaïçage d'une image brute numérique fournie par un système optique à capteur présentant des photosites monochromes filtrés par une matrice de filtres colorés. Elle concerne également un programme d'ordinateur et un circuit imageur ou graphique correspondants.

Les capteurs de systèmes optiques, généralement des photodiodes, capturent les photons de lumière sans discrimination de couleur avec un spectre très large qui s'étend de l'infrarouge au violet. Pour permettre l'acquisition de scènes en couleur, il est donc nécessaire d'acquérir les images à travers des filtres colorés. De façon classique, ces filtres colorés sont généralement rouges, verts et bleus, ces trois couleurs primaires permettant de reproduire par synthèse additive toutes les autres couleurs perceptibles par l'oeil humain. Mais tout autre ensemble de couleurs permettant par combinaison mathématique de retrouver ces trois couleurs primaires est possible, tel que par exemple l'ensemble de quatre couleurs rouge, vert, bleu, blanc ou cyan, magenta, jaune, blanc.

Naturellement, sur la base des trois couleurs primaires rouge, vert, bleu, il vient à l'esprit d'utiliser trois capteurs pour l'obtention d'une image numérique de couleur en pleine résolution. Selon ce procédé de capture, la lumière est séparée en trois faisceaux par un prisme. Chaque faisceau est ensuite filtré au moyen d'un filtre monochrome correspondant, respectivement rouge, vert et bleu. Puis chaque faisceau, focalisé sur l'un des trois capteurs est acquis séparément et recombiné pour une information de couleur RGB (de l'Anglais « Red, Green, Blue ») en chaque pixel de l'image numérique. Mais le recours à un élément optique cher et encombrant tel qu'un prisme et à l'utilisation de trois capteurs réserve ce procédé aux appareils haut de gamme.

Les appareils destinés au grand public utilisent en revanche un unique capteur d'image. La solution est alors de séparer les couleurs à l'aide d'une matrice de filtres colorés disposés en vis-à-vis des photosites monochromes du capteur et organisés en arrangements réguliers. L'arrangement le plus utilisé est la répétition d'une matrice 2x2 composée de deux pixels verts disposés en diagonale, et d'un pixel rouge et un pixel bleu disposés sur l'autre diagonale. Cet arrangement de filtres colorés porte le nom de motif de Bayer, du nom de son inventeur.

L'image brute en niveaux de gris résultant d'une capture par un tel système optique se présente alors sous la forme d'une matrice de pixels dédiés chacun à une unique couleur parmi les couleurs prédéterminées des filtres colorés, notamment rouge, vert ou bleu dans le cas d'un filtre de Bayer. L'image brute est ainsi constituée de plusieurs plans de couleurs, chacun correspondant à une couleur des filtres colorés. Il en résulte un aspect en mosaïque de l'image brute dû aux différences d'absorption des différents filtres colorés en fonction de la couleur de l'objet capté. Par exemple, un objet vert clair sera presque intégralement transmis par les filtres verts et très atténué par les filtres rouges et bleus.

De nombreuses solutions ont été explorées pour reconstruire une image numérique en couleur de même résolution que l'image brute en niveaux de gris à partir de cette dernière. Ces techniques de reconstructions sont appelées « démosaïçage », ou également parfois « dématriçage ».

Une famille de solutions est basée sur une interpolation bilinéaire de chaque plan de couleur séparément des autres : chaque couleur manquante dans un plan de couleur est interpolée à partir de la valeur de pixels voisins de même couleur par calcul d'une moyenne, la sélection des voisins participant à cette moyenne étant éventuellement guidée par des voisins de couleurs différentes. Mais l'interpolation bilinéaire, même améliorée récemment par des techniques liées à la reconnaissance de formes ou par des calculs de gradient et Laplacien, présente l'inconvénient d'atténuer fortement les détails et/ou de produire des effets dits de « zipper » sur les transitions nettes ou de fausses transitions dans les zones bruitées de l'image.

Une autre famille de solutions plus récentes est basée sur des transformées fréquentielles ou en ondelettes. Par exemple, le principe du démosaïçage peut reposer sur une transformée en ondelettes des différents plans de couleurs pris séparément et l'enrichissement des hautes fréquences de la transformée de chaque plan de couleur par les hautes fréquences des transformées des autres plans de couleurs au moyen d'un processus itératif. Une telle solution est détaillée dans l'article intitulé « Color plane interpolation using alternating projections », de B. K. Gunturk et al, IEEE Transactions on Image Processing, vol. 11, n° 9, septembre 2002. Mais cette famille de solutions est trop lourde à mettre en oeuvre et est donc réservée aux appareils haut de gamme. Des versions simplifiées de ces solutions peuvent être envisagées dans des appareils destinés au grand public mais au prix d'une qualité dégradée.

Enfin, une famille de solutions prometteuses tente de reconstituer tout d'abord une image de luminance et des images de chrominance directement à partir de l'image brute, sans séparation préalable des plans de couleurs, pour ensuite obtenir une image numérique en couleur de même résolution que l'image brute à partir de cette image de luminance et de ces images de chrominance. Elle tire profit de l'observation que, généralement, dans une représentation fréquentielle de l'image brute obtenue par transformée de Fourier, les informations de luminance et de chrominance sont à peu près bien séparées : le spectre de la chrominance est centré sur les bords et les coins de la transformée tandis que le spectre de la luminance est centré sur cette transformée. L'invention concerne plus précisément un procédé de démosaïçage de ce type.

Un tel procédé est par exemple décrit dans l'article intitulé « Frequency-domain methods for demosaïcking of Bayer-sampled color images », de E. Dubois, IEEE Signal Processing Letters, vol. 12, n° 12, décembre 2005. Selon ce procédé, la reconstitution de l'image de luminance et des images de chrominance se fait sans séparation de l'image brute en plans de couleurs. Mais elle nécessite en revanche un filtrage global de l'image brute, d'une part à l'aide d'un filtrage passe-bas pour isoler les informations de luminance, et d'autre part à l'aide d'un filtrage passe-haut pour isoler les informations de chrominance.

Ce procédé présente l'avantage d'être linéaire et donc implantable sous la forme d'un filtre de convolution. Mais son inconvénient est qu'il existe un recouvrement spectral luminance/chrominance non résolu. Il a donc tendance, en fonction de la fréquence de coupure du filtrage, à produire des effets de grille (dus à l'inclusion des fréquences de chrominance dans le signal de luminance) ou au contraire une image molle avec de nombreuses fausses couleurs (dans le cas où la luminance est trop filtrée). En outre, les filtres employés doivent être de taille importante et le filtrage est global à l'image brute, sans pouvoir s'adapter aux spécificités fréquentielles des différentes zones de l'image.

Il peut ainsi être souhaité de prévoir un procédé de démosaïçage qui permette de résoudre au moins une partie des problèmes et contraintes précités.

L'invention a donc pour objet un procédé de démosaïçage d'une image brute numérique fournie par un système optique à capteur présentant des photosites monochromes filtrés par une matrice de filtres colorés, l'image brute se présentant sous la forme d'une matrice de pixels dédiés chacun à une unique couleur parmi plusieurs couleurs prédéterminées des filtres colorés, comportant une étape d'obtention d'une image numérique en couleur de même résolution que l'image brute et dans laquelle chaque pixel présente plusieurs composantes de couleurs et résulte de pixels correspondants d'une image de luminance et d'images de chrominance reconstituées à partir de l'image brute, comportant en outre les étapes suivantes :

- transformation de l'image brute par application à ses pixels de noyaux locaux de convolution prenant en compte des pixels voisins de couleurs différentes, pour l'obtention d'une image de coefficients basse fréquence à l'aide d'un noyau local basse fréquence et d'images de coefficients haute fréquence à l'aide de noyaux locaux haute fréquence,
- reconstitution de l'image de luminance à l'aide au moins de l'image de coefficients basse fréquence, et
- reconstitution des images de chrominance à l'aide des images de coefficients haute fréquence.

Ainsi, un procédé selon l'invention permet d'obtenir une image en couleur résultant d'une image de luminance et d'images de chrominance reconstituées à partir d'une image brute de même résolution, par transformation à l'aide de noyaux de convolution locaux qui permettent de s'adapter aux spécificités fréquentielles locales de l'image brute. Tout en échappant aux inconvénients liés aux méthodes de traitements séparés des différents plans de couleurs, il améliore les approches classiques de filtrage direct et global de l'image brute.

De façon optionnelle, la reconstitution de l'image de luminance peut comporter les étapes suivantes :

- obtention d'images haute fréquence de luminance par filtrage des images de coefficients haute fréquence,
- transformation inverse de l'image de coefficients basse fréquence et des images haute fréquence de luminance obtenues par application à leurs coefficients de noyaux locaux de convolution, puis
- reconstitution de l'image de luminance par combinaison, notamment addition, de la transformée inverse de l'image de coefficients basse fréquence avec les transformées inverses des images haute fréquence de luminance obtenues.

De façon optionnelle également, le filtrage de chaque image de coefficients haute fréquence comporte les étapes suivantes :

- démodulation préalable de l'image de coefficients haute fréquence,
- filtrage passe-bas de l'image de coefficients haute fréquence démodulée, et
- remodulation de l'image de coefficients haute fréquence démodulée et filtrée passe-bas.

De façon optionnelle également, chaque image de coefficients haute fréquence démodulée, filtrée passe-bas puis remodulée est soustraite à l'image de coefficients haute fréquence correspondante avant filtrage pour la fourniture de l'image haute fréquence de luminance correspondante.

De façon optionnelle également, un procédé de démosaïçage selon l'invention peut en outre comporter au moins l'une des deux étapes suivantes :

- amélioration de netteté, notamment par rehaussement de contrastes, des images haute fréquence de luminance par filtrage, et
- traitement de saturation et/ou de correction de couleurs appliqué aux images de chrominance.

De façon optionnelle également, la taille commune des noyaux locaux de convolution correspond à la taille d'un motif élémentaire périodique de la matrice de filtres colorés.

De façon optionnelle également, la matrice de filtres colorés utilisée est une matrice de Bayer et les noyaux locaux de convolution sont des matrices carrées de quatre pixels.

De façon optionnelle également, les noyaux locaux sont des ondelettes de Haar comportant un noyau local basse fréquence et trois noyaux locaux haute fréquence formant une base de projection.

De façon optionnelle également, la démodulation préalable de chaque image de coefficients haute fréquence est constituée d'une inversion d'une ligne sur deux et/ou d'une colonne sur deux de cette image de coefficients haute fréquence.

Cette démodulation particulièrement simple peut être mise en oeuvre notamment lorsque les noyaux locaux de convolution sont des ondelettes de Haar.

De façon optionnelle également, la reconstitution des images de chrominance peut comporter les étapes suivantes :

- obtention d'images haute fréquence de chrominance par filtrage des images de coefficients haute fréquence,
- obtention d'une première image de chrominance à partir de l'une des images haute fréquence de chrominance obtenues,
- obtention d'une seconde image de chrominance par soustraction de deux des images haute fréquence de chrominance obtenues, dites images de soustraction, après réalisation d'un écrêtage réciproque pixel par pixel de ces deux images de soustraction consistant à :

  • corriger la première image de soustraction de sorte que chacun de ses coefficients soit écrêté, en valeur absolue, par la valeur du coefficient correspondant dans la seconde image de soustraction, et
  • corriger la seconde image de soustraction de sorte que chacun de ses coefficients soit écrêté, en valeur absolue, par la valeur du coefficient correspondant dans la première image de soustraction.

L'invention a également pour objet un programme d'ordinateur téléchargeable depuis un réseau de communication et/ou enregistré sur un support lisible par ordinateur et/ou exécutable par un processeur, comprenant des instructions pour l'exécution des étapes d'un procédé de démosaïçage tel que défini précédemment, lorsque ledit programme est exécuté sur un ordinateur.

Enfin, l'invention a également pour objet un circuit imageur ou graphique d'un capteur d'image présentant des photosites monochromes filtrés par une matrice de filtres colorés, comportant un processeur programmé pour l'exécution d'un procédé de démosaïçage tel que défini précédemment.

L'invention sera mieux comprise à l'aide de la description qui va suivre, donnée uniquement à titre d'exemple et faite en se référant aux dessins annexés dans lesquels :

- la figure 1 représente schématiquement les étapes successives d'un procédé de démosaïçage d'une image brute selon un mode de réalisation de l'invention,
- la figure 2 illustre le résultat d'une étape de transformation de l'image brute du procédé de la figure 1,
- la figure 3 illustre un détail d'un effet de l'étape de transformation du procédé de la figure 1 sur l'image brute,
- la figure 4 représente schématiquement le détail d'une étape de filtrage d'images de coefficients haute fréquence du procédé de la figure 1,
- la figure 5 illustre un exemple de résultat de l'étape de filtrage de la figure 4,
- la figure 6 représente schématiquement la structure générale d'un capteur d'image comportant un circuit imageur ou graphique conçu pour une mise en oeuvre de l'invention.

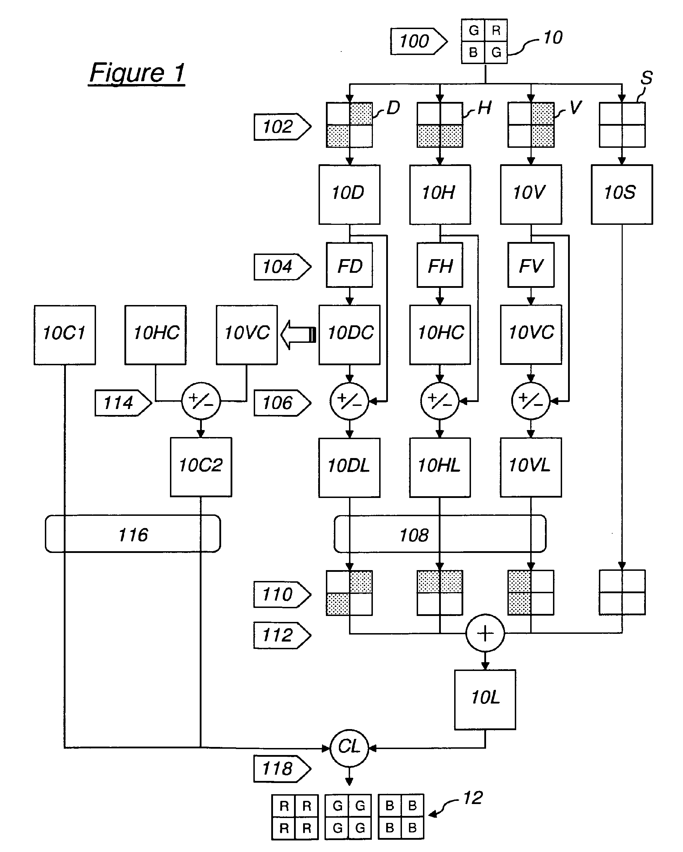

Le procédé de démosaïçage illustré sur la figure 1 comporte une étape préliminaire 100 de prétraitement d'une image brute numérique 10 en niveaux de gris fournie par un système optique à capteur unique présentant des photosites monochromes filtrés par une matrice de filtres colorés. L'image brute 10 se présente alors sous la forme d'une matrice de pixels dédiés chacun à une unique couleur parmi plusieurs couleurs prédéterminées des filtres colorés. Dans l'exemple de la figure 1, l'image brute 10 est symbolisée par un motif de Bayer RGB reproduit sur toute l'image. Ainsi, chaque matrice 2x2 de pixels extraite de l'image brute comporte deux pixels filtrés en vert (notés « G ») disposés en diagonale, ainsi qu'un pixel filtré en rouge et un pixel filtré en bleu (notés respectivement « R » et « B ») disposés sur l'autre diagonale.

L'étape de prétraitement 100 consiste à effectuer:

- une correction d'offset pour remettre à zéro le niveau de noir des pixels fournis par le capteur, et
- une opération de balance des couleurs consistant à multiplier la valeur de chaque pixel d'un plan de couleur donné de l'image brute 10 par un coefficient constant prédéterminé de manière à ce que les zones noires, grises et blanches de l'image produisent la même valeur quelle que soit la couleur du filtre associé au pixel.

Cette étape de prétraitement est suivie d'une étape 102 de transformation de l'image brute 10 par application à ses pixels de noyaux locaux de convolution. Les noyaux de convolution choisis sont dits « locaux » dans le sens où ils sont de dimensions faibles par rapport aux dimensions de l'image brute. Ce sont notamment des matrices carrées de quelques pixels de largeur, 2 à 5 au maximum.

Dans un mode de réalisation préféré de l'invention, ces noyaux locaux sont de la même taille que celle du motif élémentaire périodique de la matrice de filtres colorés. Ainsi, dans le cas d'une matrice de filtres à motif de Bayer, on préfèrera choisir des noyaux de convolution de taille 2x2, tels que par exemple les quatre noyaux de convolution de la transformée de Haar bidimensionnelle suivants :

$$S = \frac{1}{4}\begin{bmatrix} +1 & +1 \\ +1 & +1 \end{bmatrix}, \; V = \frac{1}{4}\begin{bmatrix} +1 & -1 \\ +1 & -1 \end{bmatrix}, \; H = \frac{1}{4}\begin{bmatrix} +1 & +1 \\ -1 & -1 \end{bmatrix} \; \text{et} \; D = \frac{1}{4}\begin{bmatrix} +1 & -1 \\ -1 & +1 \end{bmatrix}.$$

Ces quatre noyaux de convolution forment une base de projection locale de sous-matrices 2x2 de pixels de l'image brute 10, dans laquelle S est le noyau local basse fréquence et V, H et D sont les noyaux locaux haute fréquence. La convolution de l'image brute 10 par l'un de ces noyaux locaux se fait de façon connue en soi en faisant « glisser » le noyau dans l'image brute 10 pixel par pixel : pour tous les groupes de 2x2 pixels de l'image brute 10, le produit de convolution produira un unique coefficient égal à la somme de ces pixels pondérés, chacun, par le coefficient qui lui correspond dans le noyau. On obtient ainsi la transformée bidimensionnelle en ondelettes de Haar de l'image brute 10 sans avoir opéré de séparation de l'image brute en plans de couleurs.

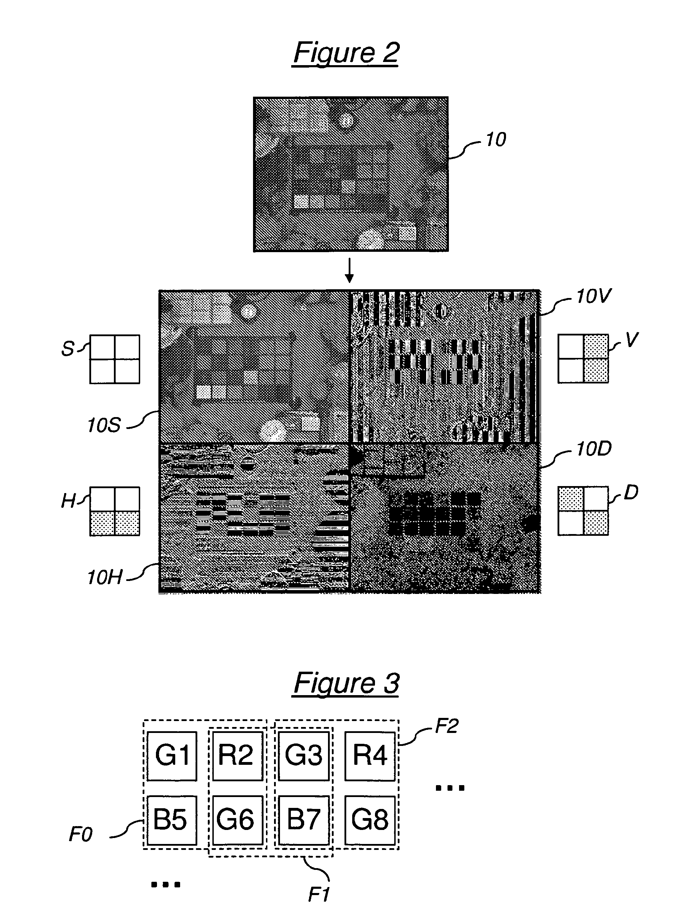

Plus précisément et comme illustré sur la figure 2, à partir de l'image brute 10, chaque produit de convolution à l'aide de S, V, H ou D produit une nouvelle image correspondante 10S, 10V, 10H, 10D de même résolution que l'image brute 10. Dans le cas de noyaux de convolution de taille 2x2, les images 10S, 10V, 10H, 10D sont cependant décalées d'un demi pixel vers la droite et le bas par rapport à l'image brute 10.

Une transformée bidimensionnelle en ondelettes de Haar d'une image monochrome fournirait une image de moyennes locales grâce à S, une image de transitions verticales grâce à V, une image de transitions horizontales grâce à H et une image de transitions diagonales grâce à D.

Appliqué à l'image brute de bayer 10, le noyau S applique toujours un filtrage passe-bas local de manière à fournir une image 10S de coefficients basse fréquence comportant des informations Y de luminance de la forme Y = 0,25R + 0,5G + 0,25B, où R, G, B sont respectivement les contributions des composantes rouges, vertes et bleues de l'image brute 10. Plus précisément, l'image de coefficients basse fréquence 10S est une image de luminance mais qui ne comporte pas toute l'information de luminance de l'image brute 10 : elle comporte les informations de moyennes locales de luminance mais pas les informations de transitions verticales, horizontales et diagonales de luminance.

Appliqués à l'image brute de bayer 10, les noyaux V, H et D appliquent quant à eux toujours un filtrage passe-haut local de manière à fournir des images 10V, 10H et 10D de coefficients haute fréquence comportant les informations de transitions verticales, horizontales et diagonales de luminance Y précitées, mais superposées à des informations parasites de chrominance. Plus précisément, les images de coefficients haute fréquence 10V, 10H et 10D sont des images qui portent des informations haute fréquence de luminance Y et les informations de chrominance associées de l'image brute 10.

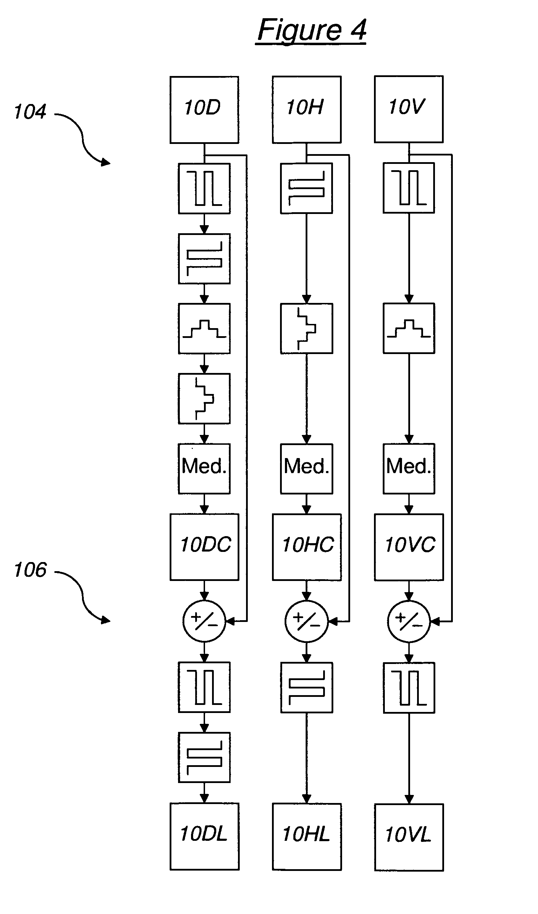

Il convient donc, à ce stade du procédé, de séparer les informations de luminance Y des informations de chrominance associées dans les images de coefficients haute fréquence 10V, 10H et 10D. Pour cela, l'étape 102 est suivie d'une étape 104 de filtrage des images de coefficients haute fréquence10V, 10H et 10D à l'aide de moyens de filtrage spécifiques FV, FH et FD. Cette étape 104 sera détaillée en référence à la figure 4.

Trois images 10VC, 10HC et 10DC sont respectivement fournies en sortie des moyens de filtrage FV, FH et FD. Comme cela sera détaillé plus loin, ces trois images portent les informations de chrominance complémentaires des informations de luminance Y. Elles seront donc qualifiées pour cela d'images haute fréquence de chrominance.

Au cours d'une étape 106 suivante, les trois images haute fréquence de chrominance 10VC, 10HC et 10DC sont soustraites des images de coefficients haute fréquence 10V, 10H et 10D avant filtrage. Les trois images résultantes 10VL, 10HL et 10DL sont des images haute fréquence de luminance comportant respectivement les informations de transitions verticales, de transitions horizontales et de transitions diagonales de la luminance Y dans l'image brute 10. Ainsi, les quatre images 10S, 10VL, 10HL et 10DL contiennent toutes les informations nécessaires à la reconstitution complète d'une image de luminance, conformément à la luminance Y définie précédemment.

De façon optionnelle, un traitement d'amélioration de netteté, notamment par rehaussement de contrastes via l'application d'un filtre, peut être appliqué aux images haute fréquence de luminance 10VL, 10HL et 10DL lors d'une étape 108. Le filtre utilisé est conçu pour permettre l'atténuation ou l'augmentation de la valeur des coefficients des images 10VL, 10HL et 10DL, potentiellement en fonction de leurs valeurs et de celles de leurs voisins. Dans sa version la plus simple, l'application d'un filtre peut consister en l'application d'un gain.

Ensuite, au cours d'une étape 110 une transformation inverse à celle réalisée à l'étape 102 est appliquée aux quatre images 10S, 10VL, 10HL et 10DL à l'aide de noyaux de convolution inverses adaptés à ceux appliqués à l'étape 102. Dans le cas particulier illustré d'une transformée inverse de Haar, les quatre noyaux peuvent être :

$$Si = \frac{1}{4}\begin{bmatrix} +1 & +1 \\ +1 & +1 \end{bmatrix}, \ Vi = \frac{1}{4}\begin{bmatrix} +1 & -1 \\ +1 & -1 \end{bmatrix}, \ Hi = \frac{1}{4}\begin{bmatrix} +1 & +1 \\ -1 & -1 \end{bmatrix} \text{ et } Di = \frac{1}{4}\begin{bmatrix} +1 & -1 \\ -1 & +1 \end{bmatrix}.$$

Les images résultantes issues de ces convolutions sont alors décalées d'un demi pixel vers la droite et le bas par rapport aux images 10S, 10VL, 10HL et 10DL. Ces images résultantes sont ensuite combinées lors d'une étape 112, plus précisément simplement additionnées, pour la reconstitution d'une image de luminance 10L décalée d'un pixel vers la droite et le bas par rapport à l'image brute 10 mais de même résolution que cette dernière.

En variante, selon un mode de réalisation très simplifié des étapes 110 et 112, les quatre noyaux de convolution inverses pourraient être : $Si' = [+1]$, $Vi' = [-1]$, $Hi' = [-1]$ et $Di' = [+1]$, ce qui revient alors à faire, pixel par pixel, l'opération suivante :

$$10L = 10S + 10VL + 10HL + 10DL .$$

Dans cette variante, l'image de luminance 10L reconstituée est décalée d'un demi pixel vers la droite et le bas par rapport à l'image brute 10. Cette variante simplifie les étapes 110 et 112 mais des artéfacts éventuellement introduits lors de l'obtention des images 10S, 10VL, 10HL et 10DL ne sont alors pas atténués.

Les trois images haute fréquence de chrominance 10VC, 10HC et 10DC respectivement fournies en sortie des moyens de filtrage FV, FH et FD à l'étape 104 subissent également un traitement lors d'une étape 114, impliquant les images 10VC et 10HC, et d'une étape optionnelle 116.

Plus précisément, comme cela sera expliqué en détail en référence aux figures 3 et 4, l'image haute fréquence de chrominance 10DC est conservée telle quelle en tant que première image de chrominance 10C1, décalée d'un demi pixel vers la droite et le bas par rapport à l'image brute 10 mais de même résolution que cette dernière.

Les images haute fréquence de chrominance 10VC et 10HC sont quant à elles soustraites l'une à l'autre pixel par pixel au cours de l'étape 114 pour former une seconde image de chrominance 10C2, décalée d'un demi pixel vers la droite et le bas par rapport à l'image brute 10 mais de même résolution que cette dernière.

De façon optionnelle, un traitement de saturation et/ou de correction de couleurs classique peut être appliqué aux deux images de chrominance 10C1 et 10C2 lors de l'étape 116.

Suite aux étapes 112 et 116, au cours d'une étape 118 réalisant une combinaison linéaire CL des images 10L, 10C1 et 10C2, une image numérique en couleur 12 de type RGB est obtenue. Dans cette image numérique en couleur 12 de même résolution que l'image brute 10, chaque composante rouge, verte ou bleue de chaque pixel résulte de pixels correspondants de l'image de luminance 10L et des images de chrominance 10C1 et 10C2.

En pratique et dans l'exemple de réalisation mentionné (transformations bidimensionnelles de Haar), si au cours de l'étape 110 les noyaux de convolution inverses Si, Vi, Hi et Di ont été choisis, il en résulte un décalage d'un demi pixel vers la droite et le bas de l'image de luminance10L par rapport aux images de chrominance 10C1 et 10C2. Dans ce cas, il est possible de recaler les images 10C1 et 10C2 sur l'image 10L en leur appliquant un filtrage de moyenne à l'aide du noyau de convolution S par exemple. Ce filtrage supplémentaire peut-être réalisé au cours de l'étape 116. En variante, il peut être avantageux d'utiliser les images haute fréquence de luminance 10VL, 10HL et 10DL pour guider un recalage différent d'un simple filtre de moyenne, tel qu'une interpolation bilinéaire parallèle aux transitions locales de luminance lorsque les pixels des images 10VL, 10HL et 10DL sont d'amplitude élevée en valeur absolue, par rapport à un critère de seuil prédéterminé.

En revanche, si au cours de l'étape 110 les noyaux de convolution inverses Si', Vi', Hi' et Di' ont été choisis, aucun recalage des images de chrominance 10C1 et 10C2 n'est nécessaire.

Pour revenir de façon plus détaillée sur l'étape de filtrage 104, il convient d'étudier au préalable l'effet de l'étape de transformation 102 sur l'image brute 10, notamment en ce qui concerne la convolution de l'image brute 10 par chacun des noyaux locaux haute fréquence V, H et D. Nous partons de l'hypothèse que chaque coefficient des images transformées 10V, 10H et 10D représente le mélange d'une information de transition de luminance pure contribuant à la reconstitution de l'image 10L et d'une information de chrominance pure contribuant à la reconstitution des images 10C1 et 10C2.

A partir de n'importe quelle matrice 2x2 de pixels voisins $\begin{bmatrix} G1 & R2 \\ B3 & G4 \end{bmatrix}$ extraite de l'image brute 10, l'application du noyau V fournit un coefficient $a_v$ =G1-R2+B3-G4 qui peut aussi être exprimé sous la forme $a_v = \Delta V + (b_v B - r_v R)$, où $\Delta$V exprime une transition verticale locale de la luminance Y telle que définie précédemment et $(b_v B - r_v R) = \alpha_v C2$ une contribution locale à la chrominance C2 de l'image 10C2.

L'application du noyau H fournit un coefficient $a_H$ =G1+R2-B3-G4 qui peut aussi être exprimé sous la forme $a_H =\Delta H -(b_H B-r_H R)$, où $\Delta$H exprime une transition horizontale locale de la luminance Y telle que définie précédemment et $- (b_H B - r_H R) = -\alpha_H C2$ une contribution locale à la chrominance C2 de l'image 10C2. On remarque que V et H apportent une contribution comparable à la chrominance C2, au signe près.

Enfin, l'application du noyau D fournit un coefficient $a_D$ =G1-R2-B3+G4 qui peut aussi être exprimé sous la forme $a_D =\Delta D + (2g_D G-b_D B-r_D R)$, où $\Delta D$ exprime une transition diagonale locale de la luminance Y telle que définie précédemment et $(2g_D G -b_D B - r_D R) = \alpha_D C1$ une contribution locale à la chrominance C1 de l'image 10C1.

De façon plus précise, comme illustré sur la figure 3 pour l'application locale du noyau de convolution V sur l'image brute 10 de Bayer, un premier coefficient V0 est obtenu pour une première fenêtre de convolution F0 :

$$V0 = G1 - G6 + B5 - R2 = \Delta V0 + Ca0 \, .$$

Un deuxième coefficient V1 est obtenu, par glissement d'une colonne vers la droite, pour une deuxième fenêtre de convolution F1 :

$$V1 = G6 - G3 - (B7 - R2) = \Delta V1 - Ca1 \, .$$

Un troisième coefficient V2 est obtenu, par glissement d'une colonne vers la droite, pour une troisième fenêtre de convolution F2 :

$$V2 = G3 - G8 + B7 - R4 = \Delta V2 + Ca2 \, .$$

On constate en observant le signe des contributions de chrominance Cai, que les coefficients Vi représentent l'information de transition verticale de luminance superposée à une information de chrominance dont le signe s'oppose à chaque coefficient. En d'autres termes, les coefficients Vi représentent l'information de transition verticale de luminance de l'image de luminance 10L superposée à l'information de chrominance modulée par la fréquence spatiale d'échantillonnage.

On peut montrer facilement que cette modulation est horizontale pour l'image 10V (le signe de l'information de chrominance s'oppose entre deux colonnes mais reste constant sur une colonne donnée), verticale pour l'image 10H (le signe de l'information de chrominance s'oppose entre deux lignes mais reste constant sur une ligne donnée), horizontale et verticale pour l'image 10D (le signe de l'information de chrominance s'oppose entre deux lignes et entre deux colonnes).

Ainsi, aussi bien dans l'image 10V que dans les images 10H et 10D, l'information de chrominance agit sur l'enveloppe du signal tandis que les transitions apparaissent comme des pics isolés ou des variations du mode commun. On comprend donc que la séparation des informations de chrominance et de luminance dans les images 10V, 10H et 10D revient à effectuer une démodulation et un filtrage adaptés du signal. Tout procédé de démodulation classique peut être utilisé, mais dans le cas d'une transformation d'une image de Bayer à l'aide des noyaux bidimensionnels de convolution de Haar, une démodulation de très faible complexité et qui nécessite peu de mémoire peut être envisagée. Elle va maintenant être détaillée en référence à la figure 4 qui revient sur l'étape de filtrage 104 telle qu'appliquée dans le cas particulier de l'image brute de Bayer 10 fournie à l'étape 100 et de la transformée de Haar appliquée à l'étape 102.

Comme illustré sur cette figure et au vu de l'effet de l'étape de transformation 102 étudié précédemment, le filtrage FV de l'image de coefficients haute fréquence 10V comporte les étapes suivantes :

- inversion d'une colonne de l'image 10V sur deux (démodulation),

- filtrage passe-bas de l'image résultante, par exemple à l'aide du noyau de convolution unidimensionnel

$\frac{1}{4}\begin{bmatrix} 1 & 2 & 1 \end{bmatrix}$ appliqué le long des lignes, et

- application éventuelle d'un filtre médian à chaque pixel de l'image résultante filtrée, le filtre médian couvrant un voisinage de ce pixel formant une zone horizontale de 3 pixels ou une zone carrée de 3x3 pixels, pour obtenir l'image 10VC.

On obtient ensuite l'image 10VL en exécutant les étapes suivantes :

- soustraction de l'image 10VC à l'image 10V, et
- inversion d'une colonne de l'image résultante sur deux (remodulation).

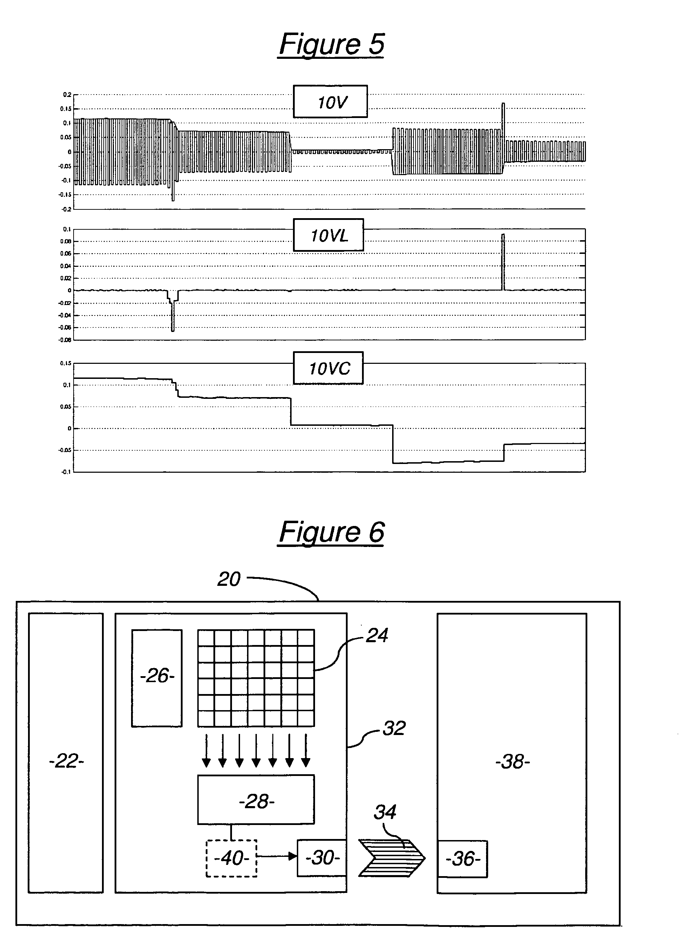

Un exemple d'effet des traitements précités sur une ligne de l'image 10V est illustré par le diagramme de la figure 5, dans lequel le signal représentant l'image 10V est modulé, tandis que celui représentant l'image 10VC en constitue l'enveloppe filtrée et que celui représentant l'image 10VL n'en reprend que les pics isolés représentatifs de transitions verticales.

Comme illustré également sur la figure 4 et au vu de l'effet de l'étape de transformation 102 étudié précédemment, le filtrage FH de l'image de coefficients haute fréquence 10H comporte les étapes suivantes :

- inversion d'une ligne de l'image 10H sur deux (démodulation),

- filtrage passe-bas de l'image résultante, par exemple à l'aide du noyau de convolution unidimensionnel $\frac{1}{4}\begin{bmatrix} 1 \\ 2 \\ 1 \end{bmatrix}$

appliqué le long des colonnes, et
- application éventuelle d'un filtre médian à chaque pixel de l'image résultante filtrée, le filtre médian couvrant un voisinage de ce pixel formant une zone verticale de 3 pixels ou une zone carrée de 3x3 pixels, pour obtenir l'image 10HC.

On obtient ensuite l'image 10HL en exécutant les étapes suivantes :

- soustraction de l'image 10HC à l'image 10H, et
- inversion d'une ligne de l'image résultante sur deux (remodulation).

Comme illustré également sur la figure 4 et au vu de l'effet de l'étape de transformation 102 étudié précédemment, le filtrage FD de l'image de coefficients haute fréquence 10D comporte les étapes suivantes :

- inversion d'une colonne de l'image 10D sur deux puis d'une ligne sur deux (démodulation),

- filtrage passe-bas de l'image résultante, par exemple à l'aide du noyau de convolution unidimensionnel $\frac{1}{4}\begin{bmatrix} 1 & 2 & 1 \end{bmatrix}$

appliqué le long des lignes puis du noyau de convolution unidimensionnel $\frac{1}{4}\begin{bmatrix} 1 \\ 2 \\ 1 \end{bmatrix}$ 2 appliqué le long des colonnes, ou par exemple à l'aide du noyau de convolution bidimensionnel

$$\frac{1}{16}\begin{bmatrix} -1 & 2 & -1 \\ 2 & 12 & 2 \\ -1 & 2 & -1 \end{bmatrix},$$

et

- application éventuelle d'un filtre médian à chaque pixel de l'image résultante filtrée, le filtre médian couvrant un voisinage de ce pixel formant une zone carrée de 3x3 pixels ou une sélection de 5 pixels en X ou en +, pour obtenir l'image 10DC.

On obtient ensuite l'image 10DL en exécutant les étapes suivantes :

- soustraction de l'image 10DC à l'image 10D, et
- inversion d'une colonne de l'image résultante sur deux puis d'une ligne sur deux (remodulation).

Les noyaux de filtrage précités pour réaliser les filtrages FV, FH et FD sont fournis à titre purement illustratif. D'autres filtres peuvent convenir à partir du moment où ils permettent de couper toute oscillation horizontale de l'image 10V, toute oscillation verticale de l'image 10H et toute oscillation horizontale et verticale de l'image 10D.

L'effet de l'étape 104 sur les images 10V, 10H et 10D est de fournir des images haute fréquence de chrominance 10VC, 10HC et 10DC débarrassées de leurs informations de luminance dont les coefficients apportent leur contribution aux informations de chrominance de l'image brute initiale 10.

Plus précisément, en reprenant les notations utilisées précédemment, les coefficients de l'image 10VC apportent une contribution de type $\alpha_v C2$, les coefficients de l'image 10HC apportent une contribution de type $-\alpha_H C2$ et les coefficients de l'image 10DC apportent une contribution de type $\alpha_D C1$. On comprend donc pourquoi la première image de chrominance 10C1 est obtenue en considérant simplement l'image 10DC, alors que la seconde image de chrominance 10C2 est obtenue en considérant les deux images 10VC et 10HC en soustrayant l'une à l'autre lors de l'étape 114. On peut d'ailleurs montrer que cette opération de soustraction a pour effet supplémentaire de réduire l'erreur dite de « Green imbalance » (divergence de réponse de deux pixels verts voisins) qui est une erreur commune aux circuits imageurs de petite taille.

Un autre problème résiduel peut persister dans la seconde image de chrominance 10C2 malgré l'opération de soustraction. Il s'agit d'artéfacts locaux de colorisation accidentelle des zones à très hautes fréquences spatiales. Pour réduire, voir supprimer, ces artéfacts locaux, avant de soustraire les images 10VC et 10HC l'une à l'autre, il est possible, au cours de l'étape 114 de réaliser le traitement préalable suivant :

- l'image 10VC est corrigée de sorte que chacun de ses coefficients soit écrêté, en valeur absolue, par la valeur du coefficient correspondant dans l'image 10HC, et
- l'image 10HC est corrigée de sorte que chacun de ses coefficients soit écrêté, en valeur absolue, par la valeur du coefficient correspondant dans l'image 10VC.

La soustraction se fait alors après ce double écrêtage qui force ainsi les deux images 10VC et 10HC à apporter la même contribution aux informations de chrominance au signe près.

On notera que ce traitement préalable de double écrêtage revient, pour chaque pixel de l'image 10VC (respectivement 10HC), à remplacer sa valeur absolue par le minimum entre sa valeur absolue et celle du pixel correspondant dans l'image 10HC (respectivement 10VC). On comprend donc ainsi pourquoi on rend neutre les zones de colorisation accidentelle par cette opération de minimisation.

Enfin, au vu de l'effet de l'étape de transformation 102 étudié précédemment, mais aussi des étapes 104 et 114, on comprend que dans l'exemple illustré l'image de luminance 10L porte une information de luminance de combinaison 2G+R+B, la première image de chrominance 10C1, une information de chrominance de combinaison 2G-R-B et la seconde image de chrominance 10C2, une information de chrominance de combinaison B-R. Il en résulte que la combinaison linéaire de ces images réalisée à l'étape 118 pour l'obtention de l'image en couleur 12, constituée de trois composantes rouge, verte et bleue notées 12R, 12G et 12B peut être définie de la façon suivante :

$$12R = \frac{1}{2}\left[\frac{1}{2}(10L - 10C1) - 10C2\right],$$

$$12G = \frac{1}{4}[10L + 10C1],$$

$$12B = \frac{1}{2}\left[\frac{1}{2}(10L - 10C1) + 10C2\right].$$

Le procédé de filtrage avec démodulation simplifiée tel que décrit précédemment est très simple à mettre en oeuvre. Ceci le rend particulièrement pertinent par rapport aux contraintes de la chaîne de lecture d'un circuit imageur grand public.

En effet, le mode de lecture standard d'un tel circuit imageur impose une transmission de chaque image ligne par ligne. Les lignes de l'image sont ensuite traitées à la volée par un processeur de traitement de signal. Pour des raisons de coût, ce processeur ne peut conserver en mémoire que quelques lignes consécutives de l'image (en général cinq au maximum). Les algorithmes de traitement de signal implantés sur ce processeur ne peuvent donc pas accéder simultanément à des valeurs de pixels distants de plus de cinq lignes. Le procédé de filtrage avec démodulation décrit précédemment est donc moins efficace que des procédés de démodulation/filtrage plus complexes mais est conçu pour respecter avantageusement cette contrainte.

Le procédé complet de démosaïçage décrit en référence aux figures 1 et 4 peut être mis en oeuvre par un capteur d'image, tel qu'un capteur CMOS dont un module optique type est représenté sur la figure 6.

Sur cette figure, un module optique 20 de capteur comporte un bloc optique 22 et une matrice 24 d'éléments sensibles, les photodiodes qui, associées à des moyens de lecture électrique non représentés, forment des pixels d'une image à capturer. Sur cette matrice 24 est disposée une matrice de filtres colorés, reprenant par exemple un motif de Bayer.

La matrice de pixels 24 est associée à un dispositif de séquencement 26 et à un dispositif de conversion analogique/numérique 28, permettant l'acquisition d'une image brute numérique matricielle de pixels. La matrice de pixels 24, le dispositif de séquencement 26 et le dispositif de conversion analogique/numérique 28 forment, avec une interface 30 de transmission des images numériques acquises, un circuit électronique 32 généralement appelé « circuit imageur » ou « plan focal » du capteur CMOS.

L'interface 30 du circuit imageur 32 est en outre généralement reliée par un lien physique électronique 34 à l'interface 36 de réception d'images numériques d'un circuit coprocesseur graphique 38 qui permet d'implémenter des algorithmes de traitement des images numériques acquises.

Le circuit coprocesseur graphique 38, ou le circuit imageur 32 lorsque ce dernier est pourvu d'un processeur 40 optionnel disposé entre le dispositif de conversion analogique/numérique 28 et l'interface 30, peut être programmé pour exécuter le procédé de démosaïçage précédemment décrit, c'est-à-dire en particulier les étapes 100 à 118 précédemment décrites

On notera enfin que l'invention ne se limite pas au mode de réalisation envisagé.

Notamment, d'autres motifs que le motif de Bayer peuvent être utilisés pour la formation de l'image brute 10. Dans ce cas, les noyaux locaux de convolution utilisés pour la transformation 102 de l'image brute doivent être adaptés : un grand nombre de familles de transformées est connu.

En fonction des filtres colorés utilisés et de la transformation appliquée à l'étape 102, l'étude des effets de cette transformation sur l'image brute 10 conduit aussi de façon connue en soi à adapter les paramètres des filtrages de l'étape 104 et des combinaisons des étapes 106, 112, 114 et 118.

D'une façon plus générale, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé de démosaïçage d'une image brute numérique (10) fournie par un système optique (20) à capteur présentant des photosites monochromes (24) filtrés par une matrice de filtres colorés, l'image brute se présentant sous la forme d'une matrice de pixels dédiés chacun à une unique couleur parmi plusieurs couleurs prédéterminées des filtres colorés et étant ainsi constituée de plusieurs plans de couleurs, chaque plan de couleur regroupant tous les pixels de l'image brute dédiés à une même couleur de filtre, comportant les étapes suivantes :

   - reconstitution d'une image de luminance à partir de l'image brute, sans séparation préalable des plans de couleurs,
   - reconstitution d'images de chrominance à partir de l'image brute, sans séparation préalable des plans de couleurs,
   - obtention (118) d'une image numérique en couleur de même résolution que l'image brute (10) et dans laquelle chaque pixel présente plusieurs composantes de couleurs et résulte de pixels correspondants de l'image de luminance (10L) et des images de chrominance (10C1, 10C2) reconstituées à partir de l'image brute (10),

**caractérisé en ce qu'**il comporte les étapes suivantes :

- obtention (102) d'une image de coefficients basse fréquence (10S) à l'aide d'un noyau local basse fréquence (S) de convolution appliqué aux pixels de l'image brute (10) sans séparation des plans de couleurs, ce noyau local basse fréquence (S) convoluant des pixels voisins de couleurs différentes issus de différents plans de couleurs dans l'image brute (10),
- obtention (102) d'images de coefficients haute fréquence (10V, 10H, 10D) à l'aide de noyaux locaux haute fréquence (V, H, D) de convolution appliqués aux pixels de l'image brute (10) sans séparation des plans de couleurs, ces noyaux locaux haute fréquence (V, H, D) convoluant des pixels voisins de couleurs différentes issus de différents plans de couleurs dans l'image brute (10),
- reconstitution (112) de l'image de luminance (10L) à l'aide au moins de l'image de coefficients basse fréquence (10S) obtenue, et
- reconstitution (104, 114) des images de chrominance (10C1, 10C2) à l'aide des images de coefficients haute fréquence (10V, 10H, 10D) obtenues.

2. Procédé de démosaïçage selon la revendication 1, dans lequel la reconstitution (112) de l'image de luminance comporte les étapes suivantes :

- obtention d'images haute fréquence de luminance (10VL, 10HL, 10DL) par filtrage (104) des images de coefficients haute fréquence (10V, 10H, 10D),
- transformation inverse (110) de l'image de coefficients basse fréquence (10S) et des images haute fréquence de luminance obtenues (10VL, 10HL, 10DL) par application à leurs coefficients de noyaux locaux de convolution, puis
- reconstitution (112) de l'image de luminance (10L) par combinaison, notamment addition, de la transformée inverse de l'image de coefficients basse fréquence (10S) avec les transformées inverses des images haute fréquence de luminance obtenues (10VL, 10HL, 10DL).

3. Procédé de démosaïçage selon la revendication 2, dans lequel le filtrage (104) de chaque image de coefficients haute fréquence (10V, 10H, 10D) comporte les étapes suivantes :

- démodulation préalable de l'image de coefficients haute fréquence (10V, 10H, 10D),
- filtrage passe-bas de l'image de coefficients haute fréquence démodulée, et
- remodulation de l'image de coefficients haute fréquence démodulée et filtrée passe-bas.

4. Procédé de démosaïçage selon la revendication 3, dans lequel chaque image de coefficients haute fréquence démodulée, filtrée passe-bas puis remodulée est soustraite (106) à l'image de coefficients haute fréquence (10V, 10H, 10D) correspondante avant filtrage (104) pour la fourniture de l'image haute fréquence de luminance correspondante (10VL, 10HL, 10DL).

5. Procédé de démosaïçage selon l'une quelconque des revendications 2 à 4, comportant en outre au moins l'une des deux étapes suivantes :

- amélioration de netteté (108), notamment par rehaussement de contrastes, des images haute fréquence de luminance (10VL, 10HL, 10DL) par filtrage, et
- traitement (116) de saturation et/ou de correction de couleurs appliqué aux images de chrominance (10C1, 10C2).

6. Procédé de démosaïçage selon l'une quelconque des revendications 1 à 5, dans lequel la taille commune des noyaux locaux de convolution (S, V, H, D) correspond à la taille d'un motif élémentaire périodique de la matrice de filtres colorés.

7. Procédé de démosaïçage selon la revendication 6, dans lequel la matrice de filtres colorés utilisée est une matrice de Bayer et dans lequel les noyaux locaux de convolution (S, V, H, D) sont des matrices carrées de quatre pixels.

8. Procédé de démosaïçage selon la revendication 7, dans lequel les noyaux locaux (S, V, H, D) sont des ondelettes de Haar comportant un noyau local basse fréquence (S) et trois noyaux locaux haute fréquence (V, H, D) formant une base de projection.

9. Procédé de démosaïçage selon les revendications 3 et 8, dans lequel la démodulation préalable de chaque image de coefficients haute fréquence (10V, 10H, 10D) est constituée d'une inversion d'une ligne sur deux et/ou d'une colonne sur deux de cette image de coefficients haute fréquence (10V, 10H, 10D).

**10.** Procédé de démosaïçage selon l'une quelconque des revendications 1 à 9, dans lequel la reconstitution (104, 114) des images de chrominance (10C1, 10C2) comporte les étapes suivantes :

- obtention d'images haute fréquence de chrominance (10VC, 10HC, 10DC) par filtrage (104) des images de coefficients haute fréquence (10V, 10H, 10D),
- obtention d'une première image de chrominance (10C1) à partir de l'une (10DC) des images haute fréquence de chrominance obtenues,
- obtention d'une seconde image de chrominance (10C2) par soustraction de deux (10VC, 10HC) des images haute fréquence de chrominance obtenues, dites images de soustraction, après réalisation d'un écrêtage réciproque pixel par pixel de ces deux images de soustraction consistant à :

• corriger la première image de soustraction (10VC) de sorte que chacun de ses coefficients soit écrêté, en valeur absolue, par la valeur du coefficient correspondant dans la seconde image de soustraction (10HC), et
• corriger la seconde image de soustraction (10HC) de sorte que chacun de ses coefficients soit écrêté, en valeur absolue, par la valeur du coefficient correspondant dans la première image de soustraction (10VC).

**11.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de démosaïçage selon l'une quelconque des revendications 1 à 10, lorsque ledit programme est exécuté sur un ordinateur.

**12.** Circuit imageur (32) ou graphique (38) d'un capteur d'image (20) présentant des photosites monochromes (24) filtrés par une matrice de filtres colorés, **caractérisé en ce qu'**il comporte un processeur (38 ; 40) programmé pour l'exécution d'un procédé de démosaïçage selon l'une quelconque des revendications 1 à 10.

**Patentansprüche**

**1.** Verfahren zum Demosaicing eines digitale Rohbilds (10), geliefert durch ein optisches System (20) mit Sensor, das einfarbige Photosites (24) aufweist, die durch eine Matrix von Farbfiltern gefiltert sind, wobei das Rohbild die Form einer Matrix von Pixeln aufweist, die jeweils für eine einzige Farbe unter mehreren vorbestimmten Farben der Farbfilter bestimmt sind und somit aus mehreren Farbschichten bestehen, wobei jede Farbschicht alle Pixel des Rohbildes umgruppiert, die für einen gleichen Farbfilter bestimmt sind, umfassend die folgenden Schritte:

- Rekonstruieren eines Luminanzbildes auf der Grundlage des Rohbildes, ohne vorherige Trennung der Farbschichten,
- Rekonstruieren von Chrominanzbildern auf der Grundlage des Rohbildes, ohne vorherige Trennung der Farbschichten,
- Erhalten (118) eines digitalen Farbbildes mit der gleichen Auflösung wie das Rohbild (10), und wobei jedes Pixel mehrere Farbkomponenten aufweist und sich aus entsprechenden Pixeln des Luminanzbildes (10L) und der Chrominanzbilder (10C1, 10C2) ergibt, die auf der Grundlage des Rohbildes (10) rekonstruiert sind, **dadurch gekennzeichnet, dass** es die folgenden Schritte umfasst:
- Erhalten (102) eines Bildes mit Niederfrequenzkoeffizienten (10S) mit Hilfe eines lokalen Faltungsniederfrequenzkerns (S), der auf die Pixel des Rohbildes (10) angewendet wird, ohne Trennung der Farbschichten, wobei dieser lokale Niederfrequenzkern (S) benachbarte Pixel mit verschiedenen Farben, die aus verschiedenen Farbschichten im Rohbild (10) stammen, faltet,
- Erhalten (102) von Bildern mit Hochfrequenzkoeffizienten (10V, 10H, 10D) mit Hilfe von lokalen Faltungshochfrequenzkernen (V, H, D), die auf die Pixel des Rohbildes (10) angewendet werden, ohne Trennung der Farbschichten, wobei diese lokalen Hochfrequenzkerne (V, H, D) benachbarte Pixel mit verschiedenen Farben, die aus verschiedenen Farbschichten im Rohbild (10) stammen, falten,
- Rekonstruieren (112) des Luminanzbildes (10L) mit Hilfe von mindestens dem erhaltenen Bild von Niederfrequenzkoeffizienten (10S), und
- Rekonstruieren (104, 114) der Chrominanzbilder (10C1, 10C2) mit Hilfe der erhaltenen Bilder mit Hochfrequenzkoeffizienten (10V, 10H, 10D).

**2.** Verfahren zum Demosaicing nach Anspruch 1, wobei die Rekonstruktion (112) des Luminanzbildes die folgenden Schritte umfasst:

- Erhalten von Hochfrequenzluminanzbildern (10VKL, 10 HL, 10DL) durch Filtern (104) der Bilder mit Hochfrequenzkoeffizienten (10V, 10H, 10D),
- inverses Transformieren (110) des Bildes mit Niederfrequenzkoeffizienten (10S) und der erhaltenen Hochfrequenzluminanzbilder (10VL, 10HL, 10DL) durch Anwenden von lokalen Faltkernen auf ihre Koeffizienten, dann
- Rekonstruieren (112) des Luminanzbildes (10L) durch Kombinieren, insbesondere Addieren, der inversen Transformation des Bildes mit Niederfrequenzkoeffizienten (10S) mit den inversen Transformationen der erhaltenen Hochfrequenzluminanzbilder (10VL, 10HL, 10DL).

**3.** Verfahren zum Demosaicing nach Anspruch 2, wobei die Filterung (104) jedes Bildes mit Hochfrequenzkoeffizienten (10V, 10H, 10D) die folgenden Schritte umfasst:

- vorheriges Demodulieren des Bildes mit Hochfrequenzkoeffizienten (10V, 10H, 10D),
- Tiefpassfiltern des demodulierten Bildes mit Hochfrequenzkoeffizienten, und
- Remodulieren des demodulierten und tiefpassgefilterten Bildes mit Hochfrequenzkoeffizienten.

**4.** Verfahren zum Demosaicing nach Anspruch 3, wobei jedes demodulierte, tiefpassgefilterte, dann remodulierte Bild mit Hochfrequenzkoeffizienten vom entsprechenden Bild mit Hochfrequenzkoeffizienten (10V, 10H, 10D) vor dem Filtern (104) subtrahiert (106) wird, um das entsprechende Hochfrequenzluminanzbild (10VL, 10HL, 10DL) zu liefern.

**5.** Verfahren zum Demosaicing nach einem der Ansprüche 2 bis 4, umfassend außerdem mindestens einen der zwei folgenden Schritte:

- Verbessern der Schärfe (108), insbesondere durch Erhöhung der Kontraste, der Hochfrequenzluminanzbilder (10VL, 10HL, 10DL) durch Filtern; und
- Sättigungs- und/oder Korrekturbehandeln (116) der Farben, angewendet auf die Chrominanzbilder (10C1, 10C2).

**6.** Verfahren zum Demosaicing nach einem der Ansprüche 1 bis 5, wobei eine gemeinsame Größe des lokalen Faltkerne (S, V, H, D) der Größe eines periodischen elementaren Motivs der Matrix von Farbfiltern entspricht.

**7.** Verfahren zum Demosaicing nach Anspruch 6, wobei die verwendete Matrix von Farbfiltern eine Bayer-Matrix ist, und wobei die lokalen Faltkerne (S, V, H, D) quadratische Matrizen mit vier Pixeln sind.

**8.** Verfahren zum Demosaicing nach Anspruch 7, wobei die lokalen Kerne (S, V, H, D) Haar-Wavelets sind, die einen lokalen Niederfrequenzkern (S) und drei lokale Hochfrequenzkerne (V, H, D) umfassen, die eine Projektionsbasis bilden.

**9.** Verfahren zum Demosaicing nach Anspruch 3 und 8, wobei die vorherige Demodulierung jedes Bildes mit Hochfrequenzkoeffizienten (10V, 10H, 10D) aus einer Inversion von jeder zweiten Linie und/oder jeder zweiten Spalte dieses Bildes mit Hochfrequenzkoeffizienten (10V, 10H, 10D) besteht.

**10.** Verfahren zum Demosaicing nach einem der Ansprüche 1 bis 9, wobei die Rekonstruktion (104, 114) der Chrominanzbilder (10C1, 10C2) die folgenden Schritte umfasst:

- Erhalten von Hochfrequenzchrominanzbildern (10VC, 10HC, 10DC) durch Filtern (104) der Bilder mit Hochfrequenzkoeffizienten (10V, 10H, 10D),
- Erhalten eines ersten Chrominanzbildes (10C1) auf der Grundlage von einem (10DC) der erhaltenen Hochfrequenzchrominanzbilder,
- Erhalten eines zweiten Chrominanzbildes (10C2) durch Subtrahieren von zwei (10DC) der erhaltenen Hochfrequenzchrominanzbilder, genannt Subtraktionsbilder, nach der Durchführung einer reziproken Amplitudenbegrenzung Pixel für Pixel in diesen zwei Subtraktionsbildern die besteht aus:
- Korrigieren des ersten Substraktionsbildes (10VC) derart, dass jeder seiner Koeffizienten in absolutem Wert durch einen Wert des entsprechenden Koeffizienten im zweiten Substraktionsbild (10HC) amplitudenbegrenzt ist,
- Korrigieren des zweiten Substraktionsbildes (10HC) derart, dass jeder seiner Koeffizienten in absolutem Wert durch den Wert des entsprechenden Koeffizienten im ersten Substraktionsbild (10VC) amplitudenbegrenzt ist.

11. Computerprogramm zum Herunterladen von einem Kommunikationsnetz und/oder auf einem computerlesbaren Träger aufgezeichnet und/oder durch einen Prozessor ausführbar, **dadurch gekennzeichnet, dass** es Anweisungen zur Durchführung der Schritte eines Verfahrens zum Demosaicing nach einem der Ansprüche 1 bis 10 umfasst, wenn das Programm auf einem Computer durchgeführt wird.

12. Abbildungs- (32) oder Graphiks- (38) schaltung eines Bildsensors (20), der einfarbige Photosites (24) aufweist, die mit einer Matrix von Farbfiltern gefiltert sind, **dadurch gekennzeichnet**, das sie einen Prozessor (38; 40) umfasst, der zur Ausführung eines Verfahrens zum Demosaicing nach einem der Ansprüche 1 bis 10 programmiert ist.


**Claims**

1. A method for demosaicing a digital raw image (10) provided by an optical device (20) with a sensor having monochrome photosites (24) filtered by a matrix of color filters, the raw image being in the form of a matrix of pixels, each dedicated to a single color among several predetermined colors from the color filters, and thus being made of several color planes, each color plane bringing together all the pixels from the raw image dedicated to one and the same filter color, comprising the following steps:

   - reconstruction of a luminance image from the raw image, without prior separation of the color planes,
   - reconstruction of chrominance images from the raw image, without prior separation of the color planes,
   - obtaining (118) a color digital image of the same resolution as the raw image (10) and in which each pixel has multiple color components and results from corresponding pixels in the luminance image (10L) and in the chrominance images (10C1, 10C2) reconstructed from the raw image (10),
   **characterized in that** it comprises the following steps:
   - obtaining (102) an image of low frequency coefficients (10S) using a low frequency local convolution kernel (S) applied to the pixels of the raw image (10) without separation of the color planes, wherein said low frequency local kernel (S) convolves neighboring pixels of different colors coming from different color planes in the raw image (10),
   - obtaining (102) images of high frequency coefficients (10V, 10H, 10D) using high frequency local convolution kernels (V, H, D) applied to the pixels of the raw image (10) without separation of the color planes, wherein said high frequency local kernels (V, H, D) convolve neighboring pixels of different colors coming from different color planes in the raw image (10),
   - reconstruction (112) of the luminance image (10L) using at least the image of low frequency coefficients (10S) obtained, and
   - reconstruction (104, 114) of the chrominance images (10C1, 10C2) using the images of high frequency coefficients (10V, 10H, 10D) obtained.

2. A method for demosaicing according to claim 1, wherein the reconstruction (112) of the luminance image comprises the following steps:

   - obtaining high frequency luminance images (10VL, 10HL, 10DL) by filtering (104) the images of high frequency coefficients (10V, 10H, 10D),
   - inverse transformation (110) of the image of low frequency coefficients (10S) and of the obtained high frequency luminance images (10VL, 10HL, 10DL) by applying local convolution kernels to their coefficients, and then
   - reconstruction (112) of the luminance image (10L) by combining, especially adding, the inverse transform of the image of low frequency coefficients (10S) with the inverse transforms of the obtained high frequency luminance images (10VL, 10HL, 10DL).

3. A method for demosaicing according to claim 2, wherein the filtering (104) of each image of high frequency coefficients (10V, 10H, 10D) comprises the following steps:

   - prior demodulation of the image of high frequency coefficients (10V, 10H, 10D),
   - low-pass filtering of the demodulated image of high frequency coefficients, and
   - remodulation of the demodulated and low-pass filtered image of high frequency coefficients.

4. A method for demosaicing according to claim 3, wherein each image of high frequency coefficients that is demodulated, low-pass filtered, and then remodulated is subtracted (106) from the corresponding image of high frequency coefficients (10V, 10H, 10D) prior to filtering (104) to provide the corresponding high frequency luminance image (10VL, 10HL, 10DL).

5. A method for demosaicing according to any one of claims 2 to 4, further comprising at least one of the following two steps:

- improved sharpness (108), such as by increasing the contrast, of the high frequency luminance images (10VL, 10HL, 10DL) by filtering, and
- color saturation and/or correction processing (116) applied to the chrominance images (10C1, 10C2).

6. A method for demosaicing according to any one of claims 1 to 5, wherein the common size of the local convolution kernels (S, V, H, D) corresponds to the size of a basic periodic pattern of the matrix of color filters.

7. A method for demosaicing according to claim 6, wherein the matrix of color filters used is a Bayer matrix and in which the local convolution kernels (S, V, H, D) are four-pixel square matrices.

8. A method for demosaicing according to claim 7, wherein the local kernels (S, V, H, D) are Haar wavelets comprising one low frequency local kernel (S) and three high frequency local kernels (V, H, D) forming a basis for projection.

9. A method for demosaicing according to claims 3 and 8, wherein the prior demodulation of each image of high frequency coefficients (10V, 10H, 10D) consists in an inversion of every other row and/or every other column of this image of high frequency coefficients (10V, 10H, 10D).

10. A method for demosaicing according to any one of claims 1 to 9, wherein the reconstruction (104, 114) of the chrominance images (10C1, 10C2) comprises the following steps:

- obtaining high frequency chrominance images (10VC, 10HC, 10DC) by filtering (104) images of high frequency coefficients (10V, 10H, 10D),
- obtaining a first chrominance image (10C1) from one (10DC) of the obtained high frequency chrominance images,
- obtaining a second chrominance image (10C2) by subtracting two (10VC, 10HC) of the obtained high frequency chrominance images, called subtraction images, after reciprocally clipping these two subtracting images pixel by pixel consisting of:

• correcting the first subtraction image (10VC) so that each of its coefficients is clipped, in terms of absolute value, by the value of the corresponding coefficient in the second subtraction image (10HC), and
• correcting the second subtraction image (10HC) so that each of its coefficients is clipped, in terms of absolute value, by the value of the corresponding coefficient in the first subtraction image (10VC).

11. A computer program that can be downloaded from a communication network and/or saved on a computer-readable medium and/or executed by a processor, **characterized in that** it comprises instructions for executing the steps of a method for demosaicing according to any one of claims 1 to 10, when said program is executed on a computer.

12. An imager (32) or graphics (38) circuit of an image sensor (20) with monochrome photosites (24) filtered by a matrix of color filters, **characterized in that** it comprises a processor (38, 40) programmed to execute a method for demosaicing according to any one of claims 1 to 10.

Figure 1

Figure 1

## _Figure 2_

## _Figure 3_

# *Figure 4*

## Figure 5

10V

10VL

10VC

## Figure 6

## RÉFÉRENCES CITÉES DANS LA DESCRIPTION

**Littérature non-brevet citée dans la description**

- **B. K. GUNTURK et al.** Color plane interpolation using alternating projections. *IEEE Transactions on Image Processing,* Septembre 2002, vol. 11 (9

- **E. DUBOIS.** Frequency-domain methods for demosaïcking of Bayer-sampled color images. *IEEE Signal Processing Letters,* Décembre 2005, vol. 12 (12